# EUROPEAN PATENT APPLICATION

(11) **EP 2 636 643 A1**
(43) Date of publication of application: **11.09.2013**
(21) Application number: 12158250.6
(22) Date of filing: 06.03.2012
(51) Int. Cl.: C01B 31/04, C04B 35/524

(54) **A method for fabricating a pyrolytic graphite film and the pyrolytic graphit film fabricated thereby**

(71) Applicant: Beijing Jones Co., Ltd., Beijing 100176 (CN)
(72) Inventor: Wu, Xiaoning, Beijing (CN)
(74) Representative: Intès, Didier Gérard André

(57) **Abstract**

A method for fabricating a pyrolytic graphite film and the pyrolytic graphite film fabricated thereby are provided in the present invention. The method uses a polymer film as a raw material film (22), overlays multiple layers of raw material films, places the overlaid multiple layers of raw material films into a container (21), and performs a heat treatment on the multiple raw material films which are in a vertical state to obtain the pyrolytic graphite films. The method disclosed in the present invention keeps spontaneous spaces among the multiple layers of raw material films. During the process of the carbonization, not only can the torsion resistance of the raw material film be controlled, but also the phase transformation of the raw material film can be fully transformed, thus the problem of uneven thermal conductivity of the pyrolytic graphite film can be solved. The pyrolytic graphite film fabricated by this method has less tortuosity, more increased surface thermal conductivity and more even thermal conductivity.

## Description

### TECHNICAL FIELD

The present invention relates to a method for fabricating a pyrolytic graphite material, and particularly relates to a method for fabricating a pyrolytic graphite film by using a polymer film as the raw material and to the pyrolytic graphite film fabricated thereby.

### BACKGROUND

As a new type of high-performance thermally conductive interface material, a pyrolytic graphite thermal conductive film has an extensive application prospect in IT products (including smart cell phones, writing pads, notebook computers, servers, vehicle controllers, etc.) and electronic devices which need high thermal conductivity due to the excellent thermal conductivity coefficient (1500w/mk) on the surface, which is 5 to 7 times higher than the thermal conductivity coefficient of aluminum.

At present, there are two basic methods for treating a raw material film at a high temperature. One method is the atmosphere heating method. A heating device heats the gas in a heat furnace to form a high temperature atmosphere, and the raw material film is heated in such high temperature atmosphere. There is no direct contact between the raw material film and the heating circuit. The other method is the electric heating method. The heating device heats the gas in the furnace; because the raw material film is a part of the heating circuit, the heating electricity flows through the raw material film, contacts and heats the raw material film directly.

A method for fabricating a pyrolytic graphite film is disclosed in patent document JP-A No. S61-275116. The method uses a polymer film such as p-POD (p-polyoxadiazole), PBT (polybenzothiazole), PBBT (polybenzobisthiazole), PBO (polybenzoxazole), PBBO (polybenzobisoxazole), or PT (polythiazole) as the raw material film and utilizes the atmospheric heating method in which, under vacuum or in an inert gas applying a tensile force, a preheat treatment is performed in a temperature range of 400°C - 700°C, and the heat treatment is performed when the temperature is higher than 1600°C, so that a high purity pyrolytic graphite film can be fabricated.

Based on the method disclosed in the above patent document JP-A No. S61-275116, another method which also utilizes the atmosphere heating method to perform the heat treatment on a raw material film is provided in a patent document JP-A No. H3-75211. Accordingly, in an inert gas under a normal pressure condition or at an elevated pressure condition, the heat treatment is first performed at a minimum temperature of 1600 °C or above on at least one of the polymer films including POD (polybenzoxadiazole), PBT, PBBT, PBO, PBBO, PMMI (poly(pyromellitic imide)), PPA (polyphthalamide), PBI (polybenzoimidazole), PBBI (polybenzobisimidazole), PT, PPV (poly(p-phenylene vinylene)), etc., and the heat treatment is then performed when the temperature is higher than 2400°C. In the example of the patent document JP-A No. H3-75211, an isotropic pressure in a specified temperature range is added to control the foam state of the pyrolytic graphite film, and then perform a rolling press on the pyrolytic graphite film to obtain the better softness and flexibility property.

In another patent document, US2011/0165379, the commonly used atmosphere heating method is abandoned. Instead, a new heating method, electric heating, is provided. According to the method, a polymer film such as POD, PI (polyimide), PPV, PBI, PBO, PT, or PA (polyamide), is used as the raw material film, and is electric heated. This method can heat the raw material films evenly; thus, solve the problem of uneven thermal conductivity of a pyrolytic graphite film.

However, there are some problems below existing in the fabrication of a pyrolytic graphite film:

The raw material transforms into the pyrolytic graphite film by a high-temperature (higher than 1600°C) phase transformation. The key indicators of the pyrolytic graphite film are thermal conductivity, flatness and softness. The thermal conductivity is directly associated with the level of the raw material film's phase transformation. The flatness is closely associated with the raw material film's torsion resistance, and the softness is closely related to the foam size of the surfaces of the pyrolytic graphite film.

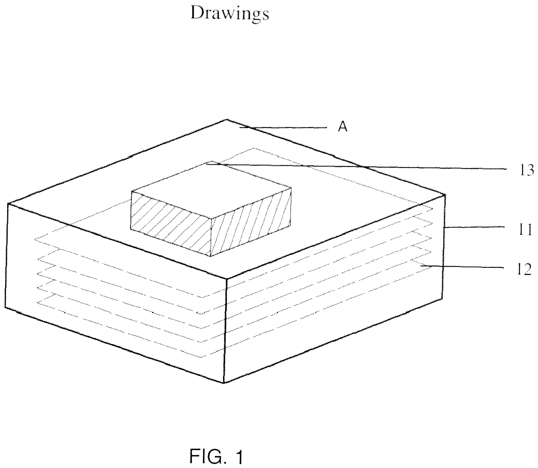

The atmosphere heating method at present, as shown in FIG. 1, includes a container 11, a raw material film 12 and a block 13. In order to increase production, multiple layers of raw material films 12 are overlaid, and are placed into the container 11 horizontally. In order to control the thermal conductivity of the raw material film 12, it is required to keep certain spaces among the multiple layers of overlaid raw martial films 12 to enable high-temperature gas convection and to make sure the overlaid raw material film 12 to fully transform into the pyrolytic graphite film.

However, due to the shrinkage in size and the foams during the heating process, there are surface dislocation sliding and partial tortuosity in the raw material film 12. In order to control the raw material film's flatness, a pressure is needed to put vertically on the raw material film 12. As shown in the FIG. 1, a weight block 13 is placed on the raw material film 12 to avoid the tortuosity during the transformation in the high temperature. The more layers there are, the more pressure is needed. However, if the pressure is too much to keep spaces among the multiple layers of raw material films 12, the high-temperature gas convection would be impeded, which would have an impact on the thermal conductivity of the pyrolytic graphite film, and which would make the thermal conductivity of the fabricated pyrolytic graphite film uneven.

### SUMMARY

A method of fabricating the pyrolytic graphite film and the pyrolytic graphite film fabricated thereby are provided in the present invention for keeping spontaneous spaces among the multiple layers of raw material films to solve the problem of uneven thermal conductivity of the pyrolytic graphite film.

In one aspect of the invention, a method for fabricating a pyrolytic graphite film uses a polymer film as the raw material film, overlays multiple layers of raw material films, places the overlaid raw material films into a container, and performs heat treatment on the multiple layers of raw material films which are in a vertical state to obtain the pyrolytic graphite films.

In one embodiment, the raw material films are placed into the container horizontally, the container is overturned so that the raw materials are in the vertical state.

In one embodiment, an opening for placing and fetching the raw material films is set on a face of the container. Advantageously, the opening fully opens the face in which it is set.

In one embodiment, the opening is set on the top of the container when the raw material films are in the vertical state.

In one embodiment, the opening is set in a face of the container that is vertical during heat treatment. Advantageously, one of the container's faces which is perpendicular to the raw material films can be fully opened.

In one embodiment, the opening is closed by a lid during heat treatment. Advantageously, the lid can be fixed on said container by a lock component. This is of particular interest when the container's face with the opening is parallel to the raw material films and can be fully opened.

In one embodiment, a plurality of venting holes are on the surface of the container.

In one embodiment, the polymer film comprises at least one of the films selected from the group of POD (polybenzoxadiazole), PI (polyimide), PPV (poly (p-phenylene vinylene)), PBI (poly benzoimidazole), PBO (polybenzooxazole), PBBO (polybenzobisoxazole), PT (polythiazole), PBT (Polybenzothiazole), PBBT (polybenzobisthiazole), and PA (polyamide).

In one embodiment, rolling press is performed on the pyrolytic graphite film after the heat treatment.

The fabricated pyrolytic graphite film is obtained through the method as disclosed above.

A method for fabricating a pyrolytic graphite film and the pyrolytic graphite film fabricated thereby are provided in the present invention. The method uses a polymer film as a raw material film, overlays multiple layers of raw material films and places the overlaid raw material films into a container. The raw material films are in the vertical state to keep spontaneous spaces among the multiple layers of raw material films. During the process of the carbonization and graphitization, not only can the torsion state of the raw material film be controlled, but also the phase transformation of the raw material film can be fully transformed, thus the problem of uneven thermal conductivity of the pyrolytic graphite film can be solved. The pyrolytic graphite film fabricated by this method has less tortuosity, more increased surface thermal conductivity and more even thermal conductivity.

### BRIEF DESCRIPTION OF THE DRAWINGS

Features and advantages of embodiments of the invention will become apparent as the following detailed description proceeds, and upon reference to the drawings, wherein like numerals depict like parts, and in which:

FIG. 1 shows a diagram of a container with filled materials in a conventional way;

FIG. 2 shows a diagram of a container with filled materials, in accordance with one embodiment of the present invention;

FIG. 3 shows a process of filling the materials in the container in accordance with one preferred embodiment of the present invention.

### DETAILED DESCRIPTION

Reference will now be made in detail to the embodiments of the present invention. While the invention will be described in conjunction with these embodiments, it will be understood that they are not intended to limit the invention to these embodiments. On the contrary, the invention is intended to cover alternatives, modifications and equivalents, which may be included within the spirit and scope of the invention as defined by the appended claims.

The present invention uses a polymer film as a raw material film, overlays multiple layers of raw material films, places the overlaid raw material films into a container and performs heat treatment on the multiple layers of raw material films which are in a vertical state to obtain the pyrolytic graphite films.

The polymer films that can be used in the present invention include POD (polybenzoxadiazole), PI (polyimide), PPV (poly (p-phenylene vinylene)), PBI (polybenzoimidazole), PBO (polybenzoxazole), PBBO (polybenzobisoxazole), PT (polythiazole), PBT (Polybenzothiazole), PBBT (polybenzobisthiazole), and PA (polyamide), At least one of the heat resistant aromatic polymer films as mentioned above can be preferably selected. These polymer films can be fabricated by a publicly known method. Moreover, compared with other polymer films, PI is much easier to carbonize and graphitize, so that a pyrolytic graphite film of excellent crystalline and thermal conductivity can be formed.

Preferably, the raw material films are filled in the spaces of two surfaces which are parallel to the films in the container, so that the raw material films are in a vertical state during the process of heat treatment. If the raw material films cannot be kept vertical, high heat resist material like graphite can be selected instead to be overlaid with the raw material films and be filled in the spaces of two surfaces which are parallel to the films in the container.

An opening is set on at least one face of the container for placing and fetching the films. The size of the opening is not limited, as long as the raw material films can be placed into or fetched from the container through the opening. Preferably, the opening is set on the top of the container when the films are in the vertical state.

For more ease in placing and fetching the films, the opening should be fully opened.

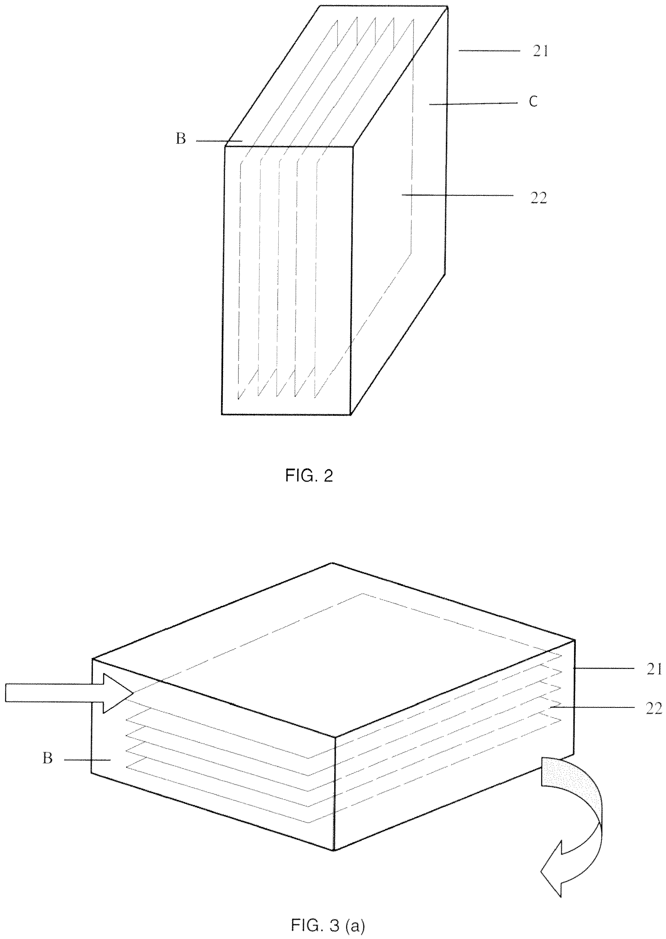

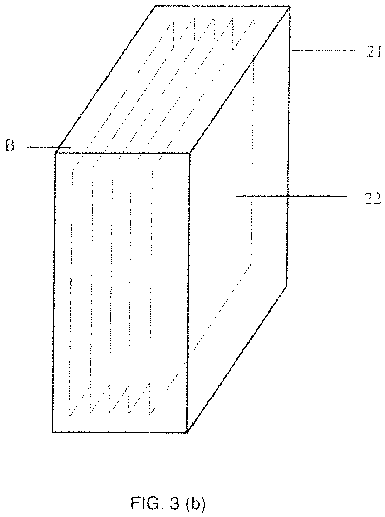

Preferably, a face which is perpendicular to the films can be fully opened. In order to bring the raw material films in the vertical state when performing the heat treatment, the raw material films are placed into the furnace as shown in FIG. 2, in which a container 21 and the raw material films 22 are shown. The container is initially placed in the orientation shown in FIG. 3 (a), where the opened face B of the container is vertical, that is perpendicular to the horizontal plane. Multiple layers of raw material films are horizontally placed into the container via the opening of face B. Then the container filled with the raw material films is pricked up with the opened face B upward, as shown in FIG. 3 (b), so that the raw material films are put in the vertical state. A lid can be put to close the face B, or the face B can remain open. If the films can be placed the container smoothly without performing the step shown in FIG. 3(a), then that step can be dispensed, and the raw material films can be directly placed vertically into the container as shown in FIG. 2 through the opening of face B.

There is more than one choice about how to set the opened face of the container; another face than face B can be used. For example, a face parallel to the films can be used for placing the raw material films, as the face C shown in FIG. 2. This face can be fully opened to place and fetch the films. As this face is arranged vertically during the heat treatment, a lock component is advantageously provided to close the face C of the container. More precisely, after the material is filled into the container, the lock is used to fix a lid so as to close the face C, in case of risks for the film to slide during the process of heat treatment.

A plurality of venting holes are set on the surface of the container, so that the high temperature gas can flow freely. Preferably, a plurality of holes are set at least on the surface of the container vertical to the films for venting. More preferably, a plurality of venting holes are set on each of the surfaces of the container.

However, care should be taken for choosing the right size of venting holes. If the size of venting hole is too large, there may be a big ripple on the film transfer surface, or the pyrolytic graphite film may be broken if hooked by the venting hole. When setting the venting hole, the area of the hole is set as large as possible under the condition that the risk for a ripple to be transferred onto the film be minimum, and a risk for the film to break be avoided. Preferably, the diameter of the hole is less than 10mm. There is no special requirement as to the shape of the hole. However, compared with the quadrangle, a hole of round shape is less likely to hook the film, which is preferred.

Then the raw material films are preheated and also heated at high temperature. In one embodiment, the raw material films are heat preserved for an hour in an inert gas under a normal pressure or elevated pressure under a temperature in the range of 400∼1200°C. Then, the raw material films are heat preserved under the temperature in the range of 1200∼3200°C for an hour, and eventually, heat treated when the temperature is greater than 2400°C. After the raw material films are cooling to the room temperature, the foamed pyrolytic graphite films are fetched. Eventually, the pyrolytic graphite films are pressed.

During the process of heat treatment, the weight of the raw material films could be reduced due to the carbonization, and the thickness is thinner, and the spaces can be spontaneously formed among the overlaid raw material films to provide a channel for the high temperature gas. The constricted films are spontaneously aligned at the bottom due to the gravity, so that the sliding among the films and the uncontrollable tortuosity caused by the incline or dislocation sliding can be avoided, thus, the pyrolytic graphite film can be evenly heat treated and can thus have an even thermal conductivity. In the process of the high temperature heat treatment, there are foam and tortuosity on the raw material films. The two surfaces which are parallel to the films play a role of position-restriction which has a vertical pressure on the foam and tortuosity. Because the position-restriction acts evenly on all the raw material films, the over-sized foam and uneven foam can be avoided, and the softness of the pyrolytic graphite film is improved.

In another embodiment of the present invention, 500 sheets PI films with the size of 200mm × 300mm and the thickness of 0.125mm are vertically placed into the container, as shown in the FIG. 2. The films are heat preserved at a temperature range of 400∼1200°C in an inert gas for an hour. Then, the films are heat preserved at the temperature range of 1200∼3200°C for an hour. After the films are cooling to the room temperature, the foamed pyrolytic graphite films are fetched. The tortuous pyrolytic graphite films are picked out, and their number is recorded. The rest of the pyrolytic graphite films are pressed. The first fabricated pyrolytic graphite film, the hundredth fabricated pyrolytic graphite film, the two-hundredth fabricated pyrolytic graphite film, the three-hundredth fabricated pyrolytic graphite film and the three-hundred fiftieth fabricated pyrolytic graphite film are picked out to test the thermal conductivity within a surface.

In a comparison embodiment, a conventional way of placement is used. 500 sheets PI films with the of 200mm × 300mm and the thickness of 0. 1 25mm are horizontally placed into the container. The films are parallel to the opened surface A of the container. A block 13 with the weight of 5KG is placed on the top of the overlaid raw material films to put a vertical pressure can the films, as show in the FIG. 1. The films are heat preserved at a temperature range of 400∼1200°C in an inert gas for an hour. Then the films are heat preserved at the temperature range of 1200∼3200°C for an hour. After the films are cooling to the room temperature, the foamed pyrolytic graphite films are fetched. The tortuous pyrolytic graphite films are picked out, and their number is recorded. The rest of the pyrolytic graphite films are pressed. The first fabricated pyrolytic graphite film, the hundredth fabricated pyrolytic graphite film, the two-hundredth fabricated pyrolytic graphite film, the three-hundredth fabricated pyrolytic graphite film and the three-hundred fiftieth fabricated pyrolytic graphite film are picked out to test the thermal conductivity within a surface.

The test result can be shown in table 1:

**Table 1**

| | Conventional Method | Method provided in present invention |
|---|---|---|
| | Surface thermal conductivity (W/mK) | Surface thermal conductivity (W/mK) |
| The number of the tortuous pyrolytic graphite films among the 500 sheets | 25 | 0 |
| No.1 | 700 | 920 |
| No.100 | 650 | 930 |
| No.200 | 620 | 926 |
| No.300 | 650 | 935 |
| No.350 | 700 | 934 |

From the result shown above, it can be seen that, compared with the conventional method, there are less tortuous pyrolytic graphite films among the pyrolytic graphite films fabricated using the method provided in the present invention, with improved thermal conductivity within a surface and more even thermal conductivity. Through the method provided in this invention; even pyrolytic graphite films with higher thermal conductivity could be attained.

While the foregoing description and drawings represent embodiments of the present invention, it will be understood that various additions, modifications and substitutions may be made therein without departing from the spirit and scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description.

## Claims

1. A method for fabricating pyrolytic graphite films, comprising:
using a polymer film as raw material film (22);
overlaying multiple layers of raw material films;
placing the overlaid multiple layers of raw material films into a container (21); and
performing a heat treatment on said multiple raw material films place in the container,
**characterized in that** the heat treatment is performed when said raw material films are in a vertical state to obtain the pyrolytic graphite films.

2. The method as claimed in claim 1, further comprising:
placing said raw material films (22) into said container (21) horizontally;
overturning said container so that said raw materials are put in said vertical state.

3. The method as claimed in claims 1 or 2, wherein an opening (B, C) for placing and fetching the raw material films (22) is set on a face of the container (21).

4. The method as claimed in claim 3, wherein the opening (B, C) fully opens the face in which it is set.

5. The method as claimed in claim 3 or 4, wherein the opening (B) is set on the top of the container (21) when the raw material films (22) are in the vertical state.

6. The method as claimed in claims 3 or 4, wherein the opening (C) is set on a face of the container that is vertical during heat treatment.

7. The method as claimed in any one of claims 3 to 6, wherein the opening (B, C) is closed by a lid during heat treatment.

8. The method as claimed in claim 7, wherein the lid is fixed on said container by a lock component.

9. The method as claimed in any one of the claims 1 to 8, wherein a plurality of venting holes are set on a surface of said container.

10. The method as claimed in any one of claims 1 to 9, wherein the polymer film comprises at least one of film selected from the group of the POD (polybenzoxadiazole), PI (polyimide), PPV (poly (p-phenylene vinylene)), PBI (poly benzoimidazole), PBO (polybenzoxazole), PBBO (polybenzobisoxazole), PT (polythiazole), PBT (polybenzothiazole), PBBT (polybenzobisthiazole), and PA (polyamide).

11. The method as claimed in any one of claims 1 to 10, further comprising:
rolling press on the pyrolytic graphite films after the heat treatment.

12. A pyrolytic graphite film, wherein the pyrolytic graphite film is fabricated by a method as claimed in any one of the claims 1 to 11.
